# EUROPÄISCHE PATENTSCHRIFT

(11) **EP 2 512 956 B1**
(45) Veröffentlichungstag und Bekanntmachung des Hinweises auf die Patenterteilung: **12.11.2014**
(21) Anmeldenummer: 10812855.4
(22) Anmeldetag: 15.12.2010
(51) Int. Cl.: B65D 85/804

(54) **PORTIONSKAPSEL UND VERWENDUNG EINER PORTIONSKAPSEL**
PORTION CAPSULE AND USE OF A PORTION CAPSULE
DOSETTE ET UTILISATION D'UNE DOSETTE

(30) Priorität: 16.12.2009 US 284389 P; 16.12.2009 DE 102009058646
(43) Veröffentlichungstag der Anmeldung: 24.10.2012
(73) Patentinhaber: K-fee System GmbH, 51469 Bergisch Gladbach (DE)
(72) Erfinder: KRÜGER, Marc, 51467 Bergisch-Gladbach (DE)
(74) Vertreter: Loock, Jan Pieter
(86) Internationale Anmeldenummer: PCT/EP2010/007642
(87) Internationale Veröffentlichungsnummer: WO 2011/082781

(56) Entgegenhaltungen:
- EP-A1- 0 524 464
- FR-A1- 2 556 323
- US-A- 5 108 768

## Beschreibung

### Stand der Technik

Die vorliegende Erfindung betrifft eine Portionskapsel zur Herstellung eines Getränks aufweisend ein im Wesentlichen kegelstumpfförmiges oder zylindrisches Basiselement, welches einen Hohlraum zur Aufnahme eines Getränkerohmaterials aufweist, und eine den Hohlraum verschließende Membran.

Solche Portionskapseln sind allgemein bekannt. Beispielsweise ist aus der Druckschrift FR 2 556 323 A1 eine ein kegelstumpfförmiges oder zylindrisches Basiselement aufweisende Portionskapsel bekannt, welche zur Herstellung eines Getränkes verwendet wird, wobei ein Hohlraums innerhalb der Portionskapsel mit einem Getränkerohmaterial, insbesondere einem Kaffeepulver befüllt ist und mittels einer Membran verschlossen ist. Die Portionskapsel wird zur Herstellung eines Kaffegetränks in einer Brühkammer angeordnet, in welcher die Membran perforiert und eine Extraktionsflüssigkeit, insbesondere heißes Wasser in den Hohlraum eingeleitet wird. Das Getränkerohmaterial wird von der Extraktionsflüssigkeit durchströmt, so dass ein Getränkeextrakt, insbesondere ein Kaffeegetränk gebildet wird. In der Brühkammer wird ferner ein Bodenbereich der Portionskapsel perforiert, so dass das Getränkeextrakt die Portionskapsel verlassen und gegebenenfalls in ein Getränkegefäß, wie beispielsweise eine Kaffeetasse gelangen kann.

Nachteilig an dieser Portionskapsel ist, dass die Portionskapsel eine vergleichsweise geringe mechanische Stabilität aufweist. Die Extraktionsflüssigkeit wird während des Extraktionsvorgangs mit Überdruck in die Brühkammer eingespritzt, so dass die Portionskapsel während des Extraktionsvorgangs einem vergleichsweise großen Druck ausgesetzt wird. Es besteht daher die Gefahr, dass die Portionskapsel insbesondere in einem Wandbereich zwischen der Membran und dem Bodenbereich seitlich einknickt und dadurch das Getränkerohmaterial in der Brühkammer nicht gleichmäßig durchströmt wird und/oder die Extraktionsflüssigkeit die Portionskapsel in der Brühkammer seitlich umströmt. Der Geschmack des zu extrahierenden Getränks wird dadurch erheblich beeinträchtigt.

Die Druckschrift US 2002/0020659 offenbart weiterhin eine Portionskapsel, die einen mit einer Membran verschlossenen Hohlraum aufweist, dessen Wandungsbereich eine Mehrzahl an Rillen aufweist.

### Offenbarung der Erfindung

Es ist daher die Aufgabe der vorliegenden Erfindung, eine Portionskapsel bereitzustellen, welche die Nachteile des Standes der Technik nicht aufweist und darüberhinaus vergleichsweise einfach und kostengünstig herstellbar ist.

Die Aufgabe wird gelöst mit einer Portionskapsel zur Herstellung eines Getränks gemäß Anspruch 1.

Die erfindungsgemäße Portionskapsel hat gegenüber der Portionskapsel gemäß des Standes der Technik den Vorteil, dass der Wandungsbereich des Basiselements durch die Mehrzahl von Rillen versteift ist. Dies hat zum einen den Vorteil, dass die Portionskapsel eine höhere mechanische Stabilität aufweist und somit eine Deformation und insbesondere ein seitliches Einknicken der Portionskapsel verhindert wird. Vorzugsweise ist somit ein gleichmäßiges Durchströmen des Getränkerohmaterials in der Brühkammer zu gewährleisten, wodurch die Qualität und die Zuverlässigkeit des Extraktionsvorgangs erheblich zu steigern ist. Insbesondere führt die Erhöhung der mechanischen Stabilität durch die Verwendung der Mehrzahl von Rillen dazu, dass die Materialstärke des Basiselements insgesamt reduziert werden kann. Die Produktion der Portionskapsel wird somit erheblich kostengünstiger und umweltfreundlicher. Andererseits wird in der Brühkammer durch die Mehrzahl der Rillen eine Anhaftung des Wandungsbereichs an die Brühkammerwandung reduziert bzw. vermieden, wodurch das Auswerfen oder Entnehmen der Portionskapsel aus der Brühkammer begünstigt wird. Ein weiterer Vorteil der Mehrzahl von Rillen ist, dass innerhalb des Hohlraums die Strömung der Extraktionsflüssigkeit entlang des Basisbereichs durch die Rillenstruktur im Wandungsbereich verwirbelt wird. Eine im Vergleich zum Stand der Technik stärkere Verwirbelung der Extraktionsflüssigkeit im Hohlraum hat gegenüber dem Stand der Technik den Vorteil, dass sich keine ungewollten und zufälligen Hauptflüssigkeitsströme durch das Bett des Getränkerohmaterials bilden, sondern stattdessen das Getränkerohmaterial in seinem gesamten Volumen durchströmt wird. Der Extraktionsvorgang wird somit wesentlicher effizienter und ist präziser zu steuern bzw. reproduzierbarer. Alternativ ist denkbar, dass die Kapselwandung eine größere Materialstärke als der Bodenbereich aufweist, so dass das Aufstechen der Portionskapsel im Bodenbereich vereinfacht wird. Das Getränkerohmaterial umfasst insbesondere Kaffeepulver (vorzugsweise gemahlenden Röstkaffee), Schokoladenpulver, Milchpulver, Tee oder dergleichen. Alternativ ist denkbar, dass das Getränkerohmaterial ein Getränkeextrakt, wie beispielsweise Instant-Kaffee umfasst.

Die Rillen im Sinne der vorliegenden Erfindung sind insbesondere Ausbuchtungen oder Einbuchtungen, welche vorzugsweise eine lineare Haupterstreckung aufweisen. Besonders bevorzugt sind die Rillen als Stege und/oder Nuten ausgebildet. Die Rillen sind dabei optional auf einer dem Hohlraum zugewandten Innenseite und/oder auf einer dem Hohlraum abgewandten Außenseite des Basiselements ausgebildet. Erfindungsgemäß ist es vorgesehen, dass die Rillen sich jeweils im Wesentlichen in einer zur Membran parallelen Ebene erstrecken, wobei die Rillen vorzugsweise jeweils um das Basiselement umlaufend vorgesehen sind, beispielsweise in Form von das Basiselement parallel zur Membran umlaufenden und im Wesentlichen in sich geschlossen ausgebildeten Ringen.

Gemäß eines weiteren Gegenstands oder einer bevorzugten Weiterbildung der vorliegenden Erfindung ist vorgesehen, dass die Membran zumindest auf einer dem Hohlraum abgewandten Außenseite aufgeraut ausgebildet ist. In vorteilhafter Weise wird somit eine Anhaftung der Membran an einer der Membran zugewandten Brühkammerwandung reduziert bzw. unterbunden, so dass ein Auswerfen bzw. Entnehmen der Portionskapsel aus der Brühkammer nach dem Extraktionsvorgang erleichtert wird. Insbesondere bei einer Brühkammer mit einem automatischen Auswurfmechanismus besteht die Gefahr, dass das Auswerfen der Portionskapsel nicht zuverlässig funktioniert, da nach dem Extraktionsvorgang eine Portionskapselwandung bzw. die Membran der Portionskapsel an einer Brühkammerwandung anhaftet. Ursächlich hierfür können beispielsweise elektrostatische Anziehungskräfte zwischen der Portionskapselwandung und der Brühkammerwandung und/oder entsprechende Oberflächenspannungen einer Flüssigkeit zwischen der Portionskapselwandung und der Brühkammerwandung sein. Diese Effekte werden durch eine Strukturierung der Portionskapselwandung, beispielsweise durch das Aufrauen der Membran und/oder durch die Anordnung von Rillen auf dem Wandungsbereich, erheblich reduziert, so dass im Vergleich zum Stand der Technik ein zuverlässiger automatischer Auswurf der Portionskapsel aus der Brühkammer gewährleistet wird. Die Strukturierung der Membran erfolgt vorzugsweise dadurch, dass die Membran auf der Außenseite mit einer aufgerauten Schutzfolie versehen ist. Alternativ ist denkbar, die Membran beispielsweise mittels Lasereinstrahlung aufzurauen.

Gemäß eines weiteren Gegenstands oder einer bevorzugten Weiterbildung der vorliegenden Erfindung ist vorgesehen, dass ein Wandungsbereich des Basiselements einen Absatz aufweist. In vorteilhafter Weise ermöglicht der Absatz ein Stapeln einer Vielzahl von Portionskapseln beispielsweise vor dem Befüllen der Portionskapsel. Zeitlich vor der Befüllung der Portionskapseln mit dem Getränkerohmaterial weist die Portionskapsel weder Getränkerohmaterial, noch eine Membran auf. Die leeren Portionskapseln und insbesondere die Basiselemente sind daher ineinander zu stapeln, wodurch eine vergleichsweise bauraumkompakte Anordnung einer Vielzahl von leeren Portionskapseln ermöglicht wird. Dies senkt insbesondere Transport- und Lagerkosten. Die erfindungsgemäße Portionskapsel weist nun einen als Stapelrand ausgebildeten Absatz auf, wodurch zwei ineinander gestapelte Portionskapseln zueinander auf Abstand gehalten werden. Die eine Portionskapsel liegt dabei mit dem Absatz auf der anderen Portionskapsel auf. Die Portionskapsel umfasst vorzugsweise einen Flansch, an welchem die Membran befestigt wird, wobei der Absatz jeweils insbesondere an den Flansch angrenzend ausgebildet ist. In vorteilhafter Weise liegt nun der Absatz der einen Portionskapsel auf dem Flansch der anderen Portionskapsel auf. In vorteilhafter Weise sind die beiden Flansche der zwei ineinander gestapelten Portionskapseln entsprechend der Absatzhöhe voneinander entfernt. In vorteilhafter Weise ist zum Entfernen der beiden ineinander gestapelten Portionskapseln voneinander jeder Flansch vergleichsweise einfach, insbesondere maschinell zu ergreifen. Ferner wird durch die Beabstandung der beiden ineinander gestapelten Portionskapseln die Bildung eines Unterdrucks zwischen den Portionskapsel verhindert, so dass die leeren Portionskapseln zuverlässig und einfach wieder voneinander getrennt werden können. Portionskapsel nach Anspruch 7, dadurch gekennzeichnet, dass die Portionskapsel einen Flansch aufweist, an welchem die Membran befestigt ist, wobei der Absatz an den Flansch angrenzend ausgebildet ist. Vorzugsweise umfasst das Basiselement im Bereich des Absatzes in einer Ebene parallel zur Membran einen vergrößerten Durchmesser. Besonders bevorzugt ist vorgesehen, dass das Basiselement sich im Bereich des Absatzes in Richtung der Membran verjüngt. In vorteilhafter Weise wird somit wirksam verhindert, dass die Absätze zweier ineinander gestapelter leerer Portionskapseln ineinander rutschen. Die Beabstandung der beiden Portionskapseln voneinander wird somit auch bei großen axialen Kräften sicher gewährleistet. Dies ist beispielsweise beim Stapeln einer vergleichsweise hohen Anzahl von leeren Portionskapseln von großer Bedeutung. Die Verjüngung des Absatzes in Richtung Membran hat zudem den Vorteil, dass die Portionskapsel durch einen in den Zwischenbereich zwischen den Flansch und den Absatz eingreifenden Halte- oder Greifarm gehalten werden kann, beispielsweise in der Brühkammer, beim Befüllen der Brühkammer oder während der Herstellung der Portionskapsel, wobei der Halteoder Greifarm hierbei automatisch zwischen Flansch und Absatz zentriert wird. Der Absatz hat somit eine selbstzentrierende Wirkung.

Gemäß eines weiteren Gegenstands oder einer bevorzugten Weiterbildung der vorliegenden Erfindung ist vorgesehen, dass die Portionskapsel einen Flansch aufweist, an welchem die Membran befestigt ist, wobei ein Verhältnis vom Außendurchmesser des an den Flansch angrenzenden Wandungsbereichs des Basiselements zum Außendurchmesser des Flansches zwischen 0,79 und 0,95 aufweist. In vorteilhafter Weise ist der Flansch im Vergleich zum an den Flansch angrenzenden Wandungsbereich daher vergleichsweise groß ausgebildet, so dass einerseits eine ausreichend große Haftungsfläche auf dem Flansch zur stabilen Befestigung der Membran an dem Flansch erzielt wird und bei der Herstellung der Portionskapsel, beispielsweise in einem Tiefziehverfahren, eine vergleichsweise einfache Zentrierung des Hohlraums im Flanschbereich erzielt wird. Insbesondere werden somit die Anforderungen an die benötigten Herstellungstoleranzen reduziert, so dass die Herstellungskosten insgesamt gesenkt werden können. Andererseits ist der Flansch im Vergleich zum Wandbereich ausreichend klein ausgebildet, so dass der Hebelarm zwischen dem Flansch und dem Wandbereich klein ist. In vorteilhafter Weise führt dies dazu, dass eine Kraftwirkung auf den Flansch nicht zu einer ungewollten Deformation des Wandungsbereichs führt. Bevorzugt liegt das Verhältnis vom Außendurchmesser des an den Flansch angrenzenden Wandungsbereichs des Basiselements zum Außendurchmesser des Flansches zwischen 0,85 und 0,89 und umfasst insbesondere im Wesentlichen 0,87. In vorteilhafter Weise wird somit ein optimaler Kompromiss zwischen großen Herstellungstoleranzen einerseits und niedrigem Materialeinsatz andererseits erzielt. Darüberhinaus wird ein optimaler Kompromiss zwischen einer guten Haftung zwischen Flansch und Membran einerseits und einem kurzen mechanischen Hebelarm zwischen dem Flansch und dem Wandungsbereich erreicht. Besonders bevorzugt ist vorgesehen, dass der Außendurchmesser des an den Flansch angrenzenden Wandungsbereichs des Basiselements im Wesentlichen 39 Millimeter und/oder der Außendurchmesser des Flansches im Wesentlichen 45 Millimeter umfasst.

Gemäß eines weiteren Gegenstands oder einer bevorzugten Weiterbildung der vorliegenden Erfindung ist vorgesehen, dass das Basiselement einen sich im Wesentlichen parallel zur Membran erstreckenden Bodenbereich und einen sich im Wesentlichen zwischen der Membran und dem Bodenbereich erstreckenden Wandungsbereich aufweist, wobei das Basiselement im Bodenbereich eine größere Materialstärke als im Wandungsbereich umfasst. In vorteilhafter Weise ist das Basiselement im Bodenbereich somit steifer als im Wandungsbereich ausgebildet. Dies hat den Vorteil, dass das Aufstechen des Bodenbereichs in der Brühkammer deutlich vereinfacht wird, da der Bodenbereich beim Aufstechen nicht oder nur geringfügig in Richtung Hohlraum nachgibt. In einer bevorzugten Weiterbildung der vorliegenden Erfindung ist vorgesehen, dass innerhalb des Hohlraums ein Filterelement angeordnet ist, welches den Hohlraum in einen ersten Bereich zur Aufnahme des Getränkerohmaterials und in einen zweiten Bereich zur Aufnahme eines Getränkeextrakts unterteilt, wobei das Filterelement auf einer einem Bodenbereich des Basiselements zugewandten Seite mit dem Bodenbereich verschweißt ist. Dieser Schweißkontakt wird insbesondere mittels einer Ultraschallschweißung hergestellt. In vorteilhafter Weise wird die Herstellung des Schweißkontakts durch die größere Materialstärke im Bodenbereich vereinfacht, da in diesem Fall im Bodenbereich genügend Material zur Herstellung des Schweißkontakts zur Verfügung steht.

Gemäß eines weiteren Gegenstands oder einer bevorzugten Weiterbildung der vorliegenden Erfindung ist vorgesehen, dass innerhalb des Hohlraums ein Filterelement angeordnet ist, welches den Hohlraum in einen ersten Bereich zur Aufnahme des Getränkerohmaterials und in einen zweiten Bereich zur Aufnahme eines Getränkeextrakts unterteilt, wobei das Filterelement auf einer einem Bodenbereich des Basiselements zugewandten Seite ein Schmelzelement aufweist. In vorteilhafter Weise ist das Filterelement im Bereich der dem Bodenbereich zugewandten Seite mit dem Bodenbereich mittels einer Ultraschallschweißnaht verschweißt. Bei der Herstellung der Ultraschweißnaht wird mittels Ultraschall das Schmelzelement aufgeschmolzen, so dass eine Schweißverbindung mit dem Bodenbereich hergestellt wird. Die Schweißverbindung ist demnach vergleichsweise einfach herzustellen. Alternativ zum Ultraschallschweißen ist auch die Verwendung aller anderen bekannten Schweißverfahren denkbar, wie beispielsweise ein Reibschweißverfahren.

Gemäß eines weiteren Gegenstands oder einer bevorzugten Weiterbildung der vorliegenden Erfindung ist vorgesehen, dass innerhalb des Hohlraums ein Filterelement angeordnet ist, welches den Hohlraum in einen ersten Bereich zur Aufnahme des Getränkerohmaterials und in einen zweiten Bereich zur Aufnahme eines Getränkeextrakts unterteilt, wobei das Filterelement wenigstens eine Haltefläche zum Greifen des Filterelements aufweist. In vorteilhafter Weise ist das Filterelement im Bereich der Haltefläche automatisiert zu greifen, so dass insbesondere eine automatisierte Montage des Filterelements innerhalb des Basiselements ermöglicht wird. Die Herstellungskosten für die Portionskapsel können somit gesenkt werden.

Gemäß einer bevorzugten Weiterbildung ist vorgesehen, dass das Filterelement eine Mehrzahl von Filteröffnungen aufweist, wobei die Filteröffnungen außerhalb der Haltefläche angeordnet sind und wobei besonders bevorzugt ist die Haltefläche in einem Zentralbereich des Filterelements ausgebildet. In vorteilhafter Weise ist somit ein Greifen des Filterelements mit einem Saugkopf möglich, welcher das Filterelement im Bereich der Haltefläche durch Unterdruck hält, ohne dass der Unterdruck durch ein Nachströmen von Luft durch die Filteröffnungen kompensiert wird. Der Saugkopf ist vorzugsweise an einem in alle Raumrichtungen bewegbaren Montage-Roboterarm befestigt.

Gemäß eines weiteren Gegenstands oder einer bevorzugten Weiterbildung der vorliegenden Erfindung ist vorgesehen, dass innerhalb des Hohlraums ein Filterelement angeordnet ist, welches den Hohlraum in einen ersten Bereich zur Aufnahme des Getränkerohmaterials und in einen zweiten Bereich zur Aufnahme eines Getränkeextrakts unterteilt, wobei die Portionskapsel ein Verhältnis eines ersten Abstands zwischen der Membran und dem Filterelement zu einem zweiten Abstand zwischen einem Bodenbereich des Basiselements und dem Filterelement zwischen 3,5 und 4,5 aufweist. Vorzugsweise beträgt das Verhältnis vom ersten Abstand zum zweiten Abstand zwischen 3,8 und 4,2 und vorzugsweise im Wesentlichen 4. Besonders bevorzugt umfasst der erste Abstand im Wesentlichen 20 Millimeter und der zweite Abstand im Wesentlichen 5 Millimeter. In vorteilhafter Weise wird somit ein optimales Verhältnis zwischen dem Volumen des ersten Bereichs und dem Volumen des zweiten Bereichs erzielt, um eine bestimmte Menge von Getränkerohmaterial angeordnet im ersten Bereich zu extrahieren und während des Extraktionsvorgangs in Wechselwirkung mit einer bestimmten Menge Luft, welche sich im zweiten Bereich befindet, zu bringen. Besonders vorteilhaft wird auf diese Weise insbesondere ein Kaffeegetränk mit einem optimalen Aroma und einer optimalen Crema erzeugt. Gleichzeitig ist die Portionskapsel möglichst bauraumkompakt und somit kostengünstig herstellbar.

Gemäß eines weiteren Gegenstands oder einer bevorzugten Weiterbildung der vorliegenden Erfindung ist vorgesehen, dass innerhalb des Hohlraums ein Filterelement angeordnet ist, welches den Hohlraum in einen ersten Bereich zur Aufnahme des Getränkerohmaterials und in einen zweiten Bereich zur Aufnahme eines Getränkeextrakts unterteilt, wobei das Filterelement eine umlaufende Dichtlippe zum Abdichten des ersten Bereichs gegenüber dem zweiten Bereich aufweist, welche sich formschlüssig an den Wandungsbereich des Basiselement anschmiegt und sich senkrecht zur Membran wenigstens über die gesamte Höhe des Filterelements erstreckt. In vorteilhafter Weise wird der zweite Bereich gegenüber dem ersten Bereich durch die Dichtlippe abgedichtet, so dass keine Extraktionsflüssigkeit an den Filteröffnungen vorbei vom ersten Bereich in den zweiten Bereich gelangt. Dies ist erforderlich, damit kein Getränkerohmaterial in den zweiten Bereich und von dort in das Getränke gelangt. Die Dichtlippe ist derart selbstdichtend ausgebildet, dass eine Erhöhung des Drucks im ersten Bereich ein verstärktes Andrücken der Dichtlippe an den Wandungsbereich verursacht, d.h. die Dichtwirkung steigt mit dem abzudichtenden Druck. In vorteilhafter Weise ist dieser Effekt besonders stark, wenn die Dichtlippe die mit den Filteröffnungen versehende Filterfläche des Filterelements in Richtung der Membran überragt. Die Dichtlippe ist in einer Ebene parallel zur Membran insbesondere kreisförmig ausgebildet ist, wobei sich der Durchmesser der Dichtlippe in Richtung des Bodenbereichs des Basiselements vorzugsweise verjüngt.

Ein weiterer Gegenstand der vorliegenden Erfindung ist die Verwendung einer erfindungsgemäßen Portionskapsel zur Herstellung eines Heißgetränks.

Ausführungsbeispiele der Erfindung sind in den Figuren dargestellt und in der nachfolgenden Beschreibung näher erläutert. Die Figuren sind lediglich beispielhaft beschrieben und schränken den allgemeinen Erfindungsgedanken nicht ein.
- **Figuren 1, 2 und 3**: zeigen schematische seitliche Schnittbildansichten einer Portionskapsel gemäß einer ersten, zweiten und dritten Ausführungsform der vorliegenden Erfindung.
- **Figur 4**: zeigt eine schematische Perspektivansicht einer Portionskapsel gemäß einer vierten Ausführungsform der vorliegenende Erfindung.
- **Figur 5**: zeigt eine schematische Aufsicht eines Filterelements einer Portionskapsel gemäß einer fünften Ausführungsform der vorliegenende Erfindung.
- **Figur 6**: zeigt eine schematische Perspektivansicht einer Mehrzahl von gestapelten Portionskapseln gemäß einer sechsten Ausführungsform der vorliegenden Erfindung.

In den verschiedenen Figuren sind gleiche Teile stets mit den gleichen Bezugszeichen versehen und werden daher in der Regel auch jeweils nur einmal benannt bzw. erwähnt.

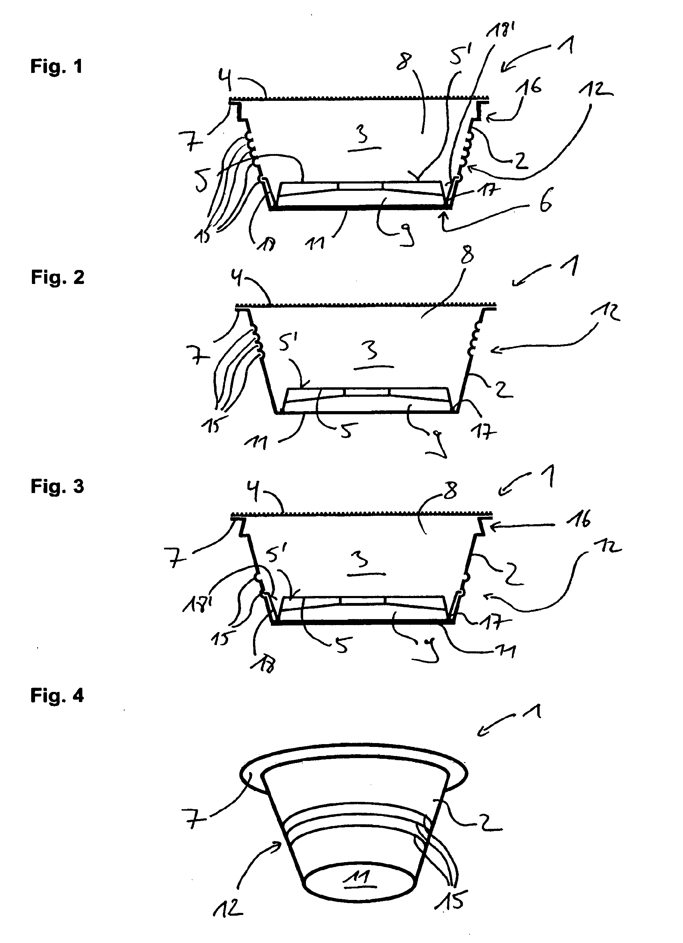

In Figur 1 ist eine schematische seitliche Schnittbildansichten einer Portionskapsel 1 gemäß einer ersten Ausführungsform der vorliegenden Erfindung dargestellt, wobei die Portionskapsel 1 ein im Wesentlichen kegelstumpfförmiges Basiselement 2 aufweist, welches topfähnlich ausgeformt ist und einen Hohlraum 3 umschließt. Der Hohlraum 3 wird von einer Membran 4 verschlossen. Das Basiselement 2 umfasst insbesondere ein weiches, halbstarres oder starres Kunststoffmaterial, welches vorzugsweise tiefgezogen wurde. Die Membran 4 umfasst vorzugsweise eine dünne Kunststoff- oder Aluminiumfolie. Das Basiselement 2 weist im Bereich der Membran 4 einen umlaufenden Befestigungsflansch 7 auf, wobei die Membran 4 mit dem Befestigungsflansch 7 stoffschlüssig verbunden, insbesondere verschweißt oder verklebt ist. Innerhalb des Basiselements 2 ist ein Filterelement 5 angeordnet, welches aus einem thermoplastischen Kunststoff, beispielsweise Polypropylen hergestellt ist. Das Filterelement 5 unterteilt den Hohlraum 3 in einen ersten Bereich 8 und in einen zweiten Bereich 9. Der erste Bereich 8 ist zur Aufnahme eines Getränkerohmaterials vorgesehen, welche in den Figuren aus Gründen der Übersichtlichkeit nicht illustriert ist. Beispielsweise wird der erste Bereich 8 mit einem Kaffeepulver gefüllt, bevor der Hohlraum 3 durch die Membran 4 verschlossen wird. Das Kaffeepulver wird beim Einfüllen in den ersten Bereich 8 vorzugsweise stark verdichtet. Der zweite Bereich 9 dient zur Aufnahme und insbesondere zum Sammeln eines nicht abgebildeten Getränkeextrakts während des Extraktionsvorgangs der Portionskapsel 1. Die Portionskapsel 1 ist dazu vorgesehen, in eine Brühkammer 10 einer nicht gezeigten Kaffeemaschine eingesetzt zu werden, in welcher dem ersten Bereich 8 eine Extraktionsflüssigkeit (beispielsweise heißes Wasser) vorzugsweise unter hohem Druck zugeführt wird. Diese Extraktionsflüssigkeit wechselwirkt mit dem Getränkerohmaterial, so dass sich ein Getränkeextrakt bildet. Das Filterelement 5 weist auf einer Filterfläche 5' eine Mehrzahl von in Figuren 1, 2 und 3 nicht abgebildeten Filteröffnungen 13 auf und fungiert somit als Sieb für das Getränkeextrakt. Das Getränkeextrakt gelangt dabei durch die Filteröffnungen 13 in den zweiten Bereich 9. Der zweite Bereich 9 wird von einem Bodenbereich 11 des Basiselements 2 begrenzt, welcher in der Brühkammer 10 beispielsweise von einem Bodenaufstechdorn 21 der Kaffeemaschine durchstochen wird, um eine Ausgangsöffnung für das Getränkeextrakt herzustellen. Alternativ ist denkbar, dass sich im Bodenbereich 11 unter dem Druck der Extraktionsflüssigkeit automatisch eine Ausgangsöffnung bildet und/oder dass im Bodenbereich 11 bereits eine Ausgangsöffnung oder ein Ausgangsventil integriert ist. Der Querschnitt der Filteröffnungen 13 ist derart ausgewählt, dass im Wesentlichen keine Partikel des Getränkerohmaterials von dem ersten zum zweiten Bereich 8, 9 gelangen. Damit das Filterelement 5 keine Verlagerung relativ zum Basiselement 2 durchführt, weist die Portionskapsel 1 optional eine Ultraschall-Schweißverbindung 6 zum Basiselement 2 auf. Die Membran 4 ist auf einer dem Hohlraum 3 abgewandten Seite aufgeraut ausgebildet, damit nach dem Extraktionsvorgang eine Anhaftung zwischen der Membran 4 und einer Wandung der Brühkammer 10 verhindert bzw. reduziert wird und somit ein fehlerfreies automatisches Auswerfen der Portionskapsel 1 aus der Brühkammer 10 erzielt wird. Darüberhinaus weist das Basiselement 2 einen Wandungsbereich 12 auf, welche sich im Wesentlichen zwischen dem Flansch 7 und dem Bodenbereich 11 erstreckt. In den Wandungsbereich 12 ist eine Mehrzahl von Rillen 15 eingebracht, welche in den Wandungsbereich 12 eingebrachte und in Form von dem Hohlraum 3 zugewandte im Wesentlichen umlaufende Nuten ausgebildet sind. Die Rillen 15 könnten in Umfangsrichtung auch teilweise unterbrochen ausgebildet sein. Die Rillen 15 sind ferner derart ausgebildet, dass der Wandungsbereich 12 durch die Mehrzahl der Rillen 15 verstärkt bzw. versteift wird. Darüberhinaus wird durch die Mehrzahl der Rillen 15, welche insbesondere über den Wandungsbereich 12 verteilt angeordnet sind, eine Anhaftung zwischen dem Wandungsbereich 12 und der Wandung der Brühkammer 10 nach dem Extraktionsvorgang verhindert, wodurch ein automatisches Auswerfen der Portionskapsel 1 aus der Brühkammer 10 erleichtert wird. Die in Figur 1 illustrierte Portionskapsel 1 umfasst ferner einen umlaufenden Absatz 16, welcher in einem Zwischenbereich zwischen dem Wandungsbereich 12 und dem Flansch 7 ausgebildet ist und welcher gegenüber dem Wandungsbereich 12 einen vergrößerten Durchmesser (parallel zur Membran 4) aufweist. Der Kontur des Absatzes 16 ist vorzugsweise derart ausgebildet, dass der Durchmesser des Absatzes 16 in Richtung des Flanschs 7, wie in Figur 1 illustriert, konstant bleibt oder sich, wie in Figur 3 dargestellt, in Richtung des Flanschs 7 wieder verringert. Der Bodenbereich 11 weist im Vergleich zum Wandungsbereich 12 eine erhöhte Materialstärke auf, um beispielsweise das Aufstechen des Bodenbereichs 11 und die Herstellung der Ultraschall-Schweißverbindung 6 zu begünstigen. Das Filterelement 5 weist auf der dem Bodenbereich 11 zugewandten Seite ein Schmelzelement 17 auf, welches während eines Ultraschall-Schweißvorgangs zur Herstellung der Ultraschall-Schweißverbindung 6 zumindest teilweise auf den Bodenbereich 11 aufgeschmolzen wird. Das Filterelement 5 weist beispielhaft eine Verstärkungsstruktur 5' auf, welche die Filterfläche 5' auf der dem zweiten Bereich 9 zugewandten Seite unterstützt. Das Filterelement 5 weist ferner eine umlaufende Dichtlippe 18 auf, welche in der Nähe des Bodenbereichs 11 mit dem übrigen Filterelement 5 verbunden ist und von dort in Richtung des Flansches 7 absteht. Die Dichtlippe 18 ist zumindest teilweise flexibel ausgebildet und überragt in Richtung 7 des Flansches 7 die Filterfläche 5'. Das freie Ende der Dichtlippe 15 ist in eine in den Wandungsbereich 12 eingebrachte Nut 15 eingeklickt und schmiegt sich an den Wandungsbereich 12 formschlüssig an, so dass eine zusätzliche Abdichtung zwischen dem ersten und dem zweiten Bereich 8, 9 erzielt wird, welche ein Umströmen des Filterelements 5 verhindert. Die Dichtlippe 18 ist dabei derart ausgebildet, dass sie eine dem ersten Bereich 8 zugewandte Druckfläche 18' aufweist. Eine Erhöhung des Drucks im ersten Bereich, beispielsweise durch Einströmen der Extraktionsflüssigkeit in den Hohlraum 3 führt nun zu einer Kraftwirkung auf die Druckfläche 18' in Richtung des Wandungsbereichs 12, so dass die Dichtwirkung zwischen dem Wandungsbereich 12 und der Dichtlippe 18 in Abhängigkeit des Drucks im ersten Bereich 8 erhöht wird. Ein erster Abstand entlang einer zur Membran 4 senkrechten Linie zwischen der Membran 4 und der der Membran 4 zugewandten Filterfläche 5' umfasst vorzugsweise im Wesentlichen 20 Millimeter, während ein zweite Abstand entlang einer zur Membran 4 senkrecht Linie zwischen der der Membran 4 zugewandten Filterfläche 5' und dem Bodenbereich 11 umfasst vorzugsweise im Wesentlichen 5 Millimeter.

In Figur 2 ist eine schematische seitliche Schnittbildansichten einer Portionskapsel 1 gemäß einer zweiten Ausführungsform der vorliegenden Erfindung dargestellt, wobei die zweite Ausführungsform im Wesentlichen der in Figur 1 illustrierten ersten Ausführungsform gleicht, wobei die Portionskapsel 1 gemäß der zweiten Ausführungsform keinen Absatz 7, keine Dichtlippe 18 und keine im Bodenbereich 11 im Vergleich zum Wandungsbereich 12 vergrößerte Materialstärke aufweist. Ferner sind die Rillen 15 als auf der dem Hohlraum 3 abgewandten Seite des Wandungsbereichs 12 ausgebildete Nuten ausgebildet.

In Figur 3 ist eine schematische seitliche Schnittbildansichten einer Portionskapsel 1 gemäß einer dritten Ausführungsform der vorliegenden Erfindung dargestellt, wobei die dritte Ausführungsform im Wesentlichen der in Figur 1 illustrierten ersten Ausführungsform gleicht, wobei die Portionskapsel 1 gemäß der dritten Ausführungsform lediglich zwei Rillen 16 im Wandungsbereich 12 aufweist, wobei eine der Rillen 15 gleichzeitig zum Einclipsen des Filterelements 5 dient.

In Figur 4 ist eine schematische Perspektivansicht einer Portionskapsel 1 gemäß einer vierten Ausführungsform der vorliegenende Erfindung dargestellt, wobei die vierte Ausführungsform im Wesentlichen der in Figur 2 illustrierten zweiten Ausführungsform gleicht, wobei im Wandungsbereich 12 drei Rillen 16 ausgebildet sind.

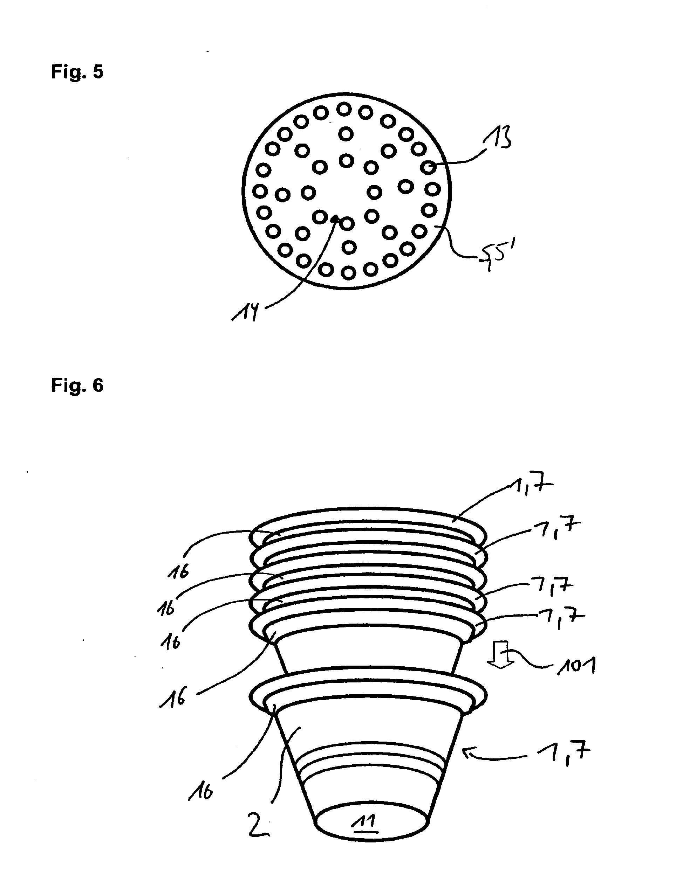

In Figur 5 ist eine schematische Aufsicht eines Filterelements 5 einer Portionskapsel 1 gemäß einer fünften Ausführungsform der vorliegenende Erfindung dargestellt, wobei die fünfte Ausführungsform im Wesentlichen der in Figur 2 illustrierten zweiten Ausführungsform gleicht, wobei in Figur 5 die Filterfläche 5' aus der Perspektive der Membran 4 abgebildet ist. Die Filteröffnungen 13 sind dabei derart angeordnet, dass im Zentralbereich der Filterfläche 5' keine Filteröffnungen 13 angeordnet sind. Die Filterfläche 5' ist im Zentralbereich darüberhinaus plan ausgebildet. Im Zentralbereich weist das Filterelement 5 daher eine Haltefläche 14 auf, welche zum Greifen des Filterelements 5 mittels eines Unterdruck-Saugkopfs vorgesehen ist. In Figur 6 ist eine schematische Perspektivansicht einer Mehrzahl von gestapelten Portionskapseln 1 gemäß einer sechsten Ausführungsform der vorliegenden Erfindung dargestellt, wobei die sechste Ausführungsform im Wesentlichen der in Figur 4 illustrierten vierten Ausführungsform gleicht, wobei die Portionskapsel 1 gemäß der sechsten Ausführungsform ferner einen Absatz 16 aufweist, noch nicht mit einem Getränkerohmaterial befüllt ist, noch kein Filterelement 5 aufweist und noch nicht mit einer Membran 4 verschlossen ist. In Figur 11 sind insgesamt sechs derartig leere Portionskapseln 1 abgebildet, wobei fünf der Portionskapseln 1 bereits ineinander gestapelt sind. Hierbei liegt immer eine Portionskapsel 1 mit ihrem Absatz 16 auf dem Flansch 7 einer darunterliegenden Portionskapsel 1 auf In der Figur 6 werden diese fünf bereits ineinander gestapelten Portionskapseln 1 entlang einer Stapelrichtung 101 in eine sechste Portionskapsel 1 gestapelt.

## Patentansprüche

1. Portionskapsel (1) zur Herstellung eines Getränks aufweisend ein im Wesentlichen kegelstumpfförmiges oder zylindrisches Basiselement (2), welches einen Hohlraum (3) zur Aufnahme eines Getränkerohmaterials aufweist, und eine den Hohlraum (3) verschließende Membran (4), wobei ein Wandungsbereich (12) des Basiselements (2) eine Mehrzahl von Rillen (15) aufweist, **dadurch gekennzeichnet, dass** die Rillen (10) sich jeweils im Wesentlichen in einer zur Membran (4) parallelen Ebene erstrecken, wobei die Rillen (15) vorzugsweise jeweils um das Basiselement (2) im Wesentlichen umlaufend ausgebildet sind und der Wandungsbereich des Basiselements (2) durch die Mehrzahl von Rillen versteibt ist.

2. Portionskapsel (1) nach einem der vorhergehenden Ansprüche, **dadurch gekennzeichnet, dass** die Rillen (15) jeweils eine Nut und/oder Ausbuchtung umfassen, welche vorzugsweise auf einer dem Hohlraum (3) zugewandten Innenseite und/oder auf einer dem Hohlraum (3) abgewandten Außenseiten des Basiselements (2) ausgebildet sind.

3. Portionskapsel (1) nach einem der vorhergehenden Ansprüche, **dadurch gekennzeichnet, dass** die Rillen (15) derart ausgebildet sind, dass mittels der Rillen (15) der Wandungsbereich (12) versteift wird und/oder dass mittels der Rillen (15) eine Verwirbelung einer den Hohlraum (3) durchströmenden Extraktionsflüssigkeit erzeugt wird.

4. Portionskapsel (1) nach einem der vorhergehenden Ansprüche, **dadurch gekennzeichnet, dass** die Membran (4) zumindest auf einer dem Hohlraum (3) abgewandten Außenseite aufgeraut ausgebildet ist, wobei die Membran (4) auf der Außenseite mit einer aufgerauten Schutzfolie versehen ist.

5. Portionskapsel (1) nach einem der vorhergehenden Ansprüche, **dadurch gekennzeichnet, dass** ein Wandungsbereich (12) des Basiselements (2) einen Absatz (16) aufweist, wobei die Portionskapsel (1) einen Flansch (7) aufweist, an welchem die Membran (4) befestigt ist, wobei der Absatz (16) an den Flansch (7) angrenzend ausgebildet ist, wobei das Basiselement (2) im Bereich des Absatzes (16) in einer Ebene parallel zur Membran (4) einen vergrößerten Durchmesser aufweist, wobei das Basiselement (2) sich im Bereich des Absatzes (16) in Richtung der Membran (4) verjüngt.

6. Portionskapsel (1) nach einem der vorhergehenden Ansprüche, **dadurch gekennzeichnet, dass** die Portionskapsel (1) einen Flansch (7) aufweist, an welchem die Membran (4) befestigt ist, wobei ein Verhältnis vom Durchmesser des an den Flansch (7) angrenzenden Wandungsbereichs des Basiselements (2) zum Durchmesser des Flansches (7) zwischen 0,79 und 0,95 aufweist.

7. Portionskapsel (1) nach Anspruch 6, **dadurch gekennzeichnet, dass** das Verhältnis vom Durchmesser des an den Flansch (7) angrenzenden Wandungsbereichs (12) des Basiselements (2) zum Durchmesser des Flansches (7) zwischen 0,85 und 0,89 liegt und insbesondere im Wesentlichen 0,87 umfasst.

8. Portionskapsel (1) nach einem der Ansprüche 6 oder 7, **dadurch gekennzeichnet, dass** der Durchmesser des an den Flansch (7) angrenzenden Wandungsbereichs (12) des Basiselements (2) im Wesentlichen 39 Millimeter und/oder der Durchmesser des Flansches (7) im Wesentlichen 45 Millimeter umfasst.

9. Portionskapsel (1) nach einem der vorhergehenden Ansprüche, **dadurch gekennzeichnet, dass** das Basiselement (2) einen sich im Wesentlichen parallel zur Membran (4) erstreckenden Bodenbereich (11) und einen sich im Wesentlichen zwischen der Membran (4) und dem Bodenbereich (11) erstreckenden Wandungsbereich (12) aufweist, wobei das Basiselement (2) im Bodenbereich (11) eine größere Materialstärke als im Wandungsbereich (12) umfasst.

10. Portionskapsel (1) nach einem der vorhergehenden Ansprüche, **dadurch gekennzeichnet, dass** innerhalb des Hohlraums (3) ein Filterelement (5) angeordnet ist, welches den Hohlraum (3) in einen ersten Bereich (8) zur Aufnahme des Getränkerohmaterials und in einen zweiten Bereich (9) zur Aufnahme eines Getränkeextrakts unterteilt, wobei das Filterelement (5) auf einer einem Bodenbereich (11) des Basiselements (2) zugewandten Seite ein Schmelzelement (17) aufweist.

11. Portionskapsel (1) nach einem der vorhergehenden Ansprüche, **dadurch gekennzeichnet, dass** innerhalb des Hohlraums (3) ein Filterelement (5) angeordnet ist, welches den Hohlraum (3) in einen ersten Bereich (8) zur Aufnahme des Getränkerohmaterials und in einen zweiten Bereich (9) zur Aufnahme eines Getränkeextrakts unterteilt, wobei das Filterelement (5) wenigstens eine Haltefläche (14) zum Greifen des Filterelements (5) aufweist.

12. Portionskapsel (1) nach Anspruch 11, **dadurch gekennzeichnet, dass** das Filterelement (5) eine Mehrzahl von Filteröffnungen (13) aufweist, wobei die Filteröffnungen (13) außerhalb der Haltefläche (14) angeordnet sind, wobei die Haltefläche in einem Zentralbereich des Filterelements (5) ausgebildet ist.

13. Portionskapsel (1) nach einem der vorhergehenden Ansprüche, **dadurch gekennzeichnet, dass** innerhalb des Hohlraums (3) ein Filterelement (5) angeordnet ist, welches den Hohlraum (3) in einen ersten Bereich (8) zur Aufnahme des Getränkerohmaterials und in einen zweiten Bereich (9) zur Aufnahme eines Getränkeextrakts unterteilt, wobei die Portionskapsel (1) ein Verhältnis eines ersten Abstands zwischen der Membran und dem Filterelement (5) zu einem zweiten Abstand zwischen einem Bodenbereich des Basiselements und dem Filterelement zwischen 3,5 und 4,5 aufweist, wobei das Verhältnis vom ersten Abstand zum zweiten Abstand zwischen 3,8 und 4,2 und vorzugsweise im Wesentlichen 4 beträgt, wobei der erste Abstand im Wesentlichen 20 Millimeter und der zweite Abstand im Wesentlichen 5 Millimeter umfasst.

14. Portionskapsel (1) nach einem der vorhergehenden Ansprüche, **dadurch gekennzeichnet, dass** innerhalb des Hohlraums (3) ein Filterelement (5) angeordnet ist, welches den Hohlraum (3) in einen ersten Bereich (8) zur Aufnahme des Getränkerohmaterials und in einen zweiten Bereich (9) zur Aufnahme eines Getränkeextrakts unterteilt, wobei das Filterelement (5) eine umlaufende Dichtlippe (18) zum Abdichten des ersten Bereichs (8) gegenüber dem zweiten Bereich (9) aufweist, welche sich formschlüssig an den Wandungsbereich (12) des Basiselements (2) anschmiegt und sich senkrecht zur Membran (4) wenigstens über die gesamte Höhe des Filterelements (5) erstreckt, wobei die Dichtlippe (18) in einer Ebene parallel zur Membran (4) kreisförmig ausgebildet ist, wobei sich der Durchmesser der Dichtlippe (18) in Richtung des Bodenbereichs des Basiselements (2) verjüngt, wobei die Dichtlippe (18) eine dem ersten Bereich (8) zugewandte Druckfläche (18') aufweist, welche insbesondere derart ausgebildet ist, dass ein Überdruck im ersten Bereich (8) zu einer Erhöhung eines Dichtungsdrucks zwischen der Dichtlippe (18) und dem Wandungsbereich (12) führt.

15. Verwendung einer Portionskapsel (1) nach einem der vorhergehenden Ansprüche zur Herstellung eines Heißgetränks.

## Claims

1. Single-portion capsule (1) for preparing a beverage comprising a substantially frusto-conical or cylindrical base member (2) having a cavity (3) for receiving a beverage raw material, and a membrane (4) enclosing the cavity (3), wherein a wall portion (12) of the base element (2) has a large number of grooves (15), **characterised in that** the grooves (10) extend substantially in each case in a plane parallel to the membrane (4), wherein the grooves (15) are preferably formed in each case essentially circumferentially to the base member (2) and the wall area of the base element (2) is reinforced by the large number of grooves.

2. Single-portion capsule (1) according to any one of the preceding claims, **characterised in that** the grooves (15) each comprise a notch and/or recess, which are preferably formed on an internal face looking towards the cavity (3) and/or on an external face looking away from the cavity (3) of the base member (2).

3. Single-portion capsule (1) according to any one of the preceding claims, **characterised in that** the grooves (15) are designed in such a way that by means of the grooves (15) the wall area (12) is reinforced and/or that by means of grooves (15) a turbulence of the extraction liquid flowing through the cavity (3) is generated.

4. Single-portion capsule (1) according to any one of the preceding claims, **characterised in that** the membrane (4) is roughened at least on an external face turned away from the cavity (3), wherein the membrane (4) on the outer surface is provided with a roughened protective foil.

5. Single-portion capsule (1) according to any one of the preceding claims, **characterised in that** a wall area (12) of the base element (2) has a shoulder (16),
wherein the single-portion capsule (1) has a flange (7) to which the membrane (4) is fixed, wherein the shoulder (16) is formed adjacent to the flange (7), such that the base element (2) in the area of the shoulder (16) has an enlarged diameter in a plane parallel to the membrane (4), wherein the base member (2) in the area of the shoulder (16) tapers in the direction of the membrane (4).

6. Single-portion capsule (1) according to any one of the preceding claims, **characterised in that** the single-portion capsule (1) has a flange (7) to which the membrane (4) is fixed, wherein the ratio of the diameter of the wall portion of the base member (2) adjacent to the flange (7) to diameter of the flange (7) is between 0.79 and 0.95.

7. Single-portion capsule (1) according to claim 6, **characterised in that** the ratio of the diameter of the wall portion (12) of the base member (2) adjacent to the flange (7) to the diameter of the flange (7) is between 0.85 and 0.89 and most preferably 0.87.

8. Single-portion capsule (1) according to one of claims 6 or 7, **characterised in that** the diameter of the wall portion (12) of the base member (2) adjacent to the flange (7) is essentially 39 millimetres and/or the diameter of the flange (7) is essentially 45 millimetres.

9. Single-portion capsule (1) according to any one of the preceding claims, **characterised in that** the base element (2) has a bottom portion (11) extending essentially in parallel to the membrane (4) and a wall portion (12) extending essentially between said diaphragm (4) and the bottom portion (11), wherein the base member (2) has a greater material thickness in the bottom area (11) than in the wall (12).

10. Single-portion capsule (1) according to any one of the preceding claims, **characterised in that** within the cavity (3) a filter element (5) is installed, which divides the cavity (3) into a first area (8) for receiving the beverage raw material and a second area (9) for receiving a beverage extract, wherein the filter element (5) on a face looking at a bottom portion (11) of the base member (2) has a fuse element (17).

11. Single-portion capsule (1) according to any one of the preceding claims, **characterised in that** within the cavity (3) a filter element (5) is installed, which divides the cavity (3) into a first area (8) for receiving the beverage raw material and a second area (9) for receiving a beverage extract, wherein the filter element (5) has at least one retaining surface (14) for gripping the filter element (5).

12. Single-portion capsule (1) according to claim 11, **characterised in that** the filter element (5) has a large number of filter openings (13), wherein the filter openings (13) are installed outside the support surface (14), wherein the support surface is formed in a central area of the filter element (5).

13. Single-portion capsule (1) according to any one of the preceding claims, **characterised in that** within the cavity (3) a filter element (5) is installed, which divides the cavity (3) into a first area (8) for receiving the beverage raw material and a second area (9) to accommodate a beverage extract, wherein the single-portion capsule (1) has a ratio of a first distance between the membrane and the filter element (5) to a second distance between a bottom portion of the base member and the filter element of between 3.5 and 4.5, wherein the ratio of the first distance and the second distance is between 3.8 and 4.2 and preferably 4, such that the first distance is preferably 20 mm and the second distance is preferably 5 mm.

14. Single-portion capsule (1) according to any one of the preceding claims, **characterised in that** within the cavity (3) a filter element (5) is installed, which divides the cavity (3) into a first area (8) for receiving the beverage raw material and a second area (9) for receiving a beverage extract, wherein the filter element (5) has a circumferential sealing lip (18) for sealing the first area (8) relative to the second area (9), which is form-fit to the wall portion (12) of the base member (2) and extends perpendicular to the membrane (4) at least over the entire height of the filter element (5), wherein the sealing lip (18) is of circular design in a plane parallel to the membrane (4), wherein the diameter of the sealing lip (18) tapers in the direction of the bottom portion of the base member (2), such that the sealing lip (18) has a pressure surface (18) facing the first area (8) which is formed in particular **in that** an excess pressure in the first area (8) results in an increase of a sealing pressure between the sealing lip (18) and the wall area (12).

15. Use of a single-portion capsule (1) according to any one of the preceding claims for the preparation of a hot beverage.

## Revendications

1. Capsule à dose (1) pour la fabrication d'une boisson, présentant un élément de base (2) sensiblement en forme de tronc conique ou cylindrique (2), qui présente une cavité (3) destinée à recevoir une matière première de boisson et une membrane (4) obturant la cavité (4), une partie paroi (12) de l'élément de base (2) présentant une pluralité de rainures (15), **caractérisée en ce que** les rainures (10) s'étendent sensiblement dans un plan parallèle à la membrane (4), les rainures (15) étant réalisées de préférence de manière à entourer sensiblement l'élément de base (2) et la partie paroi de l'élément de base (2) étant rigidifiée par la pluralité de rainures (15).

2. Capsule à dose (1) selon une des revendications précédentes, **caractérisée en ce que** les rainures (15) comportent respectivement une gorge et/ou un trou qui sont pratiqués de préférence sur une face intérieure tournée vers la cavité (3) et/ou sur une face extérieure détournée de la cavité (3) de l'élément de base (2).

3. Capsule à dose (1) selon une des revendications précédentes, **caractérisée en ce que** les rainures (15) sont réalisées de manière à ce que la partie paroi (12) soit rigidifiée au moyen des rainures (15) et/ou qu'un tourbillon d'un liquide d'extraction s'écoulant (3) à travers la cavité (3) soit généré.

4. Capsule à dose (1) selon une des revendications précédentes, **caractérisée en ce que** la membrane (4) est rugueuse du moins sur une face extérieure détournée de la cavité (3), la membrane (4) étant pourvue sur sa face extérieure d'un film protecteur rugueux.

5. Capsule à dose (1) selon une des revendications précédentes, **caractérisée en ce qu'**une partie paroi (12) de l'élément de base (2) présente un talon (16), la capsule à dose (1) présentant une bride (7) sur laquelle la membrane (4) est fixée, le talon (16) étant réalisé adjacent à la bride (7), l'élément de base (2) présentant un diamètre accru au niveau du talon (16), dans un plan parallèle à la membrane (4), l'élément de base (2) se rétrécissant au niveau du talon (16) en direction de la membrane (4).

6. Capsule à dose (1) selon une des revendications précédentes, **caractérisée en ce que** la capsule à dose (1) présente une bride (7) sur laquelle la membrane (4) est fixée, un rapport entre le diamètre de la partie paroi adjacente à la bride (7) de l'élément de base (2) et le diamètre de la bride (7) se situant entre 0,79 et 0,95.

7. Capsule à dose (1) selon la revendication 6, **caractérisée en ce que** le diamètre de la partie paroi (12) adjacente à la bride (7) de l'élément de base (2) et le diamètre de la bride (7) se situe entre 0,85 et 0,89 et est sensiblement de 0,87.

8. Capsule à dose (1) selon une des revendications 6 ou 7, **caractérisée en ce que** le diamètre de la partie paroi adjacente (12) à la bride (7) de l'élément de base (2) est sensiblement de 39 millimètres et/ou que le diamètre de la bride (7) est sensiblement de 45 millimètres.

9. Capsule à dose (1) selon une des revendications précédentes, **caractérisée en ce que** l'élément de base (2) présente une partie fond (11) s'étendant sensiblement à la parallèle de la membrane (4) et une partie paroi (12) s'étendant sensiblement entre la membrane (4) et la partie fond (11), l'élément de base (2) ayant dans sa partie fond (11) une épaisseur de matériau supérieure à celle de la partie paroi (12).

10. Capsule à dose (1) selon une des revendications précédentes, **caractérisée en ce que**, à l'intérieur de la cavité (3), est disposé un élément de filtration (5) qui divise la cavité (3) en une première partie (8) destinée à recevoir la matière première de boisson et une seconde partie (9) destinée à recevoir un extrait de boisson, l'élément de filtration (5) présentant un élément de fusion (17) sur la face tournée vers une partie fond (11) de l'élément de base (2).

11. Capsule à dose (1) selon une des revendications précédentes, **caractérisée en ce que**, à l'intérieur de la cavité (3), est disposé un élément de filtration (5) qui divise la cavité (3) en une première partie (8) destinée à recevoir la matière première de boisson et une seconde partie destinée à recevoir un extrait de boisson, l'élément de filtration (5) présentant au moins une surface de retenue (14) pour tenir l'élément de filtration (5).

12. Capsule à dose (1) selon la revendication 11, **caractérisée en ce que** l'élément de filtration (5) présente une pluralité d'orifices de filtration (13), les orifices de filtration (13) étant disposés en dehors de la surface de retenue (14), la surface de retenue étant réalisée dans une partie centrale de l'élément de filtration (5).

13. Capsule à dose (1) selon une des revendications précédentes, **caractérisée en ce que**, à l'intérieur de la cavité (3), est disposé un élément de filtration (5) qui divise la cavité (3) en une première partie (8) destinée à recevoir la matière première de boisson et une seconde partie (9) destinée à recevoir un extrait de boisson, la capsule à dose (1) présentant un rapport entre une première distance séparant la membrane de l'élément de filtration (5) et une seconde distance séparant une partie fond de l'élément de base et l'élément de filtration (5) situé entre 3,5 et 4,5, le rapport entre la première distance et la seconde distance se situant entre 3,8 et 4,2 et de préférence sensiblement à 4, la première distance étant sensiblement de 20 millimètres et la seconde distance sensiblement de 5 millimètres.

14. Capsule à dose (1) selon une des revendications précédentes, **caractérisée en ce que**, à l'intérieur de la cavité (3), est disposé un élément de filtration (5) qui divise la cavité (3) en une première partie (8) destinée à recevoir la matière première de boisson et une seconde partie (9) destinée à recevoir un extrait de boisson, l'élément de filtration (5) présentant une lèvre d'étanchéité périphérique (18) pour isoler la première partie (8) de la seconde partie (9), lèvre qui suit en correspondance géométrique une partie paroi (12) de l'élément de base (2) et s'étend perpendiculairement à la membrane (4) au moins sur toute la hauteur de l'élément de filtration (5), la lèvre d'étanchéité (18) étant réalisée en forme de cercle dans un plan parallèle à la membrane (4), le diamètre de la lèvre d'étanchéité (18) diminuant en direction de la partie fond de l'élément de base (2), la lèvre d'étanchéité (18) présentant une surface de compression (18') tournée vers la première partie (8) et qui est en particulier réalisée de manière à ce qu'une surpression dans la première partie (8) entraîne une augmentation d'une pression d'étanchéité entre la lèvre d'étanchéité (18) et la partie paroi (12).

15. Utilisation d'une capsule à dose (1) selon une des revendications précédentes pour préparer une boisson chaude.
